# EUROPEAN PATENT SPECIFICATION

(11) **EP 1 671 872 B1**
(45) Date of publication and mention of the grant of the patent: **05.12.2007**
(21) Application number: 05027408.3
(22) Date of filing: 14.12.2005
(51) Int. Cl.: B62D 21/15, B60R 19/00, B62D 25/20

(54) **Body reinforcement device for a vehicle**
Karosserieverstärkung für ein Fahrzeug
Renfort de carosserie pour véhicule

(30) Priority: 14.12.2004 JP 2004361120
(43) Date of publication of application: 21.06.2006
(73) Proprietor: Yamaha Hatsudoki Kabushiki Kaisha, Iwata-shi, Shizuoka-ken (JP)
(72) Inventor: Kondou, Katsuhiro, Iwata-shi Shizuoka-ken (JP); Satou, Masahiro, Iwata-shi Shizuoka-ken (JP)
(74) Representative: Grünecker, Kinkeldey, Stockmair & Schwanhäusser Anwaltssozietät

(56) References cited:
- EP-A- 1 209 062
- EP-A- 1 225 119
- WO-A-20/04104442
- WO-A-20/05077738
- US-A- 4 674 791
- US-A- 6 007 123
- US-B1- 6 467 836

## Description

This invention relates to a body reinforcement device for a vehicle; in which a body frame is reinforced while generation of vibration is prevented, so that the riding feeling is improved.

Hitherto, in the body frames of some motor vehicles, an aftermarket reinforcement member, for example, as disclosed in USP No. 5411311, is in use to increase the strength of the body frame partially in response to running conditions or preference of the driver. The reinforcement member disclosed in USP No. 5411311, is formed in a slender shape, and mounted to the upper ends of regions of the body frame called as a pair of left and right suspension towers located in the engine room, so as to connect these suspension towers together. Therefore, the reinforcement member reinforces the body against lateral forces applied to the body from the upper ends of shock absorbers for a front wheel suspension device.

However, the foregoing reinforcement member might impair the riding feeling because of generation of vibration when a load applied to the member is released immediately after the member is compressed. For such generation of vibration to be prevented, damping force generation means such as a hydraulic damper is provided in the middle of the member in the longitudinal direction, as shown in JP-A-2002-211437, corresponding to EP-A-1209062 and disclosing the device of the preamble of claim 1.

However, since there is not much space left in the engine room due to the arrangement of an engine and other equipment, and the hood height is limited, determination of disposition of the reinforce member is problematic. In addition, since the member extends across the upper space in the engine room, serviceability of the engine and other equipment is lowered.

On the other hand, it is possible that the reinforcement member is disposed in the space for passengers, but this unfavorably results in a narrower space for passengers.

In view of the foregoing, the object of this invention is to provide a body reinforcement device for a vehicle capable of effecting easy improvement in riding feeling through attachment/detachment of the reinforcement member in response to the preference of the driver, without a significant change in the body structure of the existing vehicle and without lowering serviceability and room space properties.

This objective is solved in an inventive manner by a body reinforcement device with the features of claim 1.

Preferably, mounting portions for the body reinforcement device to the body frame are left and right side frames extending longitudinally on both sides of the body.

Within the above body reinforcement devices for a vehicle, said body reinforcement device might be formed in a slender shape

Further, the hydraulic damping force generation means might be provided in a middle portion of the body reinforcement device.

According to another embodiment, the body reinforcement device for a vehicle further comprises a pair of mounting members at its ends attachable to the vehicle body, a hydraulic damper having a hydraulic cylinder welded to one of the mounting members, and an extension rod for connecting a piston rod of the hydraulic damper with the other one of the mounting members.

Therein, it is further preferable if the hydraulic cylinder of the hydraulic damper comprises a cylinder tube closed at one end by a welding cone provided at a center of a support plate of one of the mounting member.

Additionally, it is preferable if the body reinforcement device for a vehicle further comprises a piston fitted in a cylinder tube, defining a first oil chamber and a second oil chamber in the cylinder tube, and being fixed to the piston rod, wherein the first oil chamber is formed between the piston and a free piston fitted for movement in the cylinder tube, and wherein the free piston defines the first oil chamber and a high pressure gas chamber in one end portion of the cylinder tube.

In the following, the present invention is explained in greater detail with respect to several embodiments thereof in conjunction with the accompanying drawings, wherein:
- Fig. 1: is a perspective view of a body frame equipped with a body reinforcement device for a vehicle according to an embodiment,
- Fig. 2: is a plan view of the body reinforcement device for a vehicle according to this embodiment,
- Fig. 3: is a vertical sectional view of the body reinforcement device for a vehicle according to this embodiment,
- Fig. 4: is a perspective view showing another embodiment of the body reinforcement device for a vehicle according to another embodiment,
- Fig. 5: is a perspective view showing on an enlarged scale the mounting portion for the body reinforcement device of Fig. 4,
- Fig. 6: is a perspective view showing an embodiment of the body reinforcement device for a vehicle according to another embodiment, which is mounted on the rear faces of traction hook supports,
- Fig. 7: is a perspective view showing the embodiment of the body reinforcement device of Fig. 6 for a vehicle, which is mounted on the bottom surfaces of traction hook supports, and
- Fig. 8: is a perspective view showing another embodiment of the body reinforcement device for a vehicle according to this invention, which is mounted to the lower arm mounting portion.

### (First Embodiment)

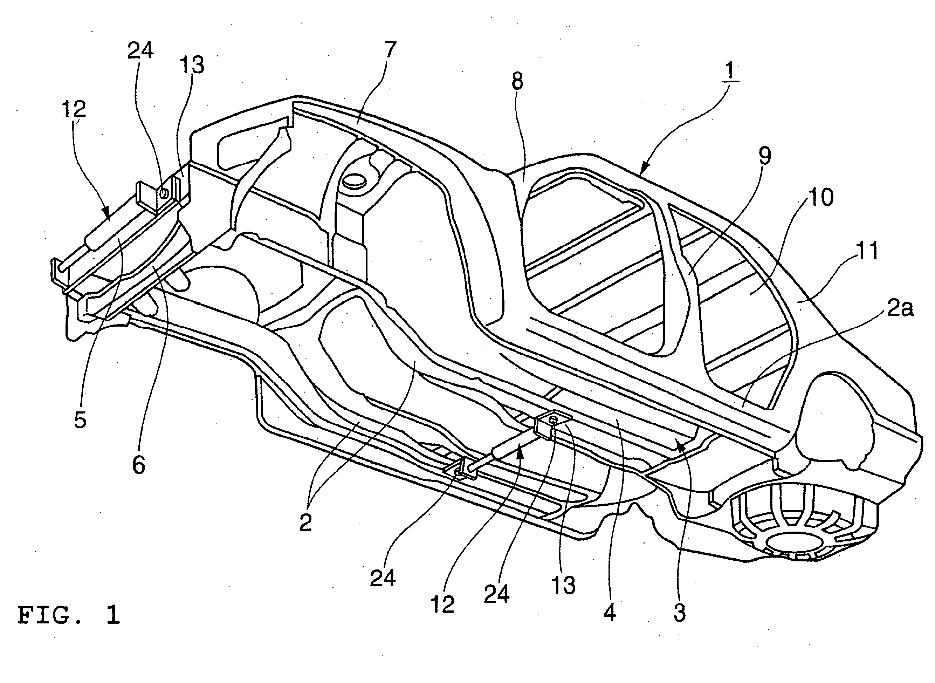

Now, an embodiment of the body reinforcement device for a vehicle will be described in detail with reference to Fig. 1-Fig. 3.

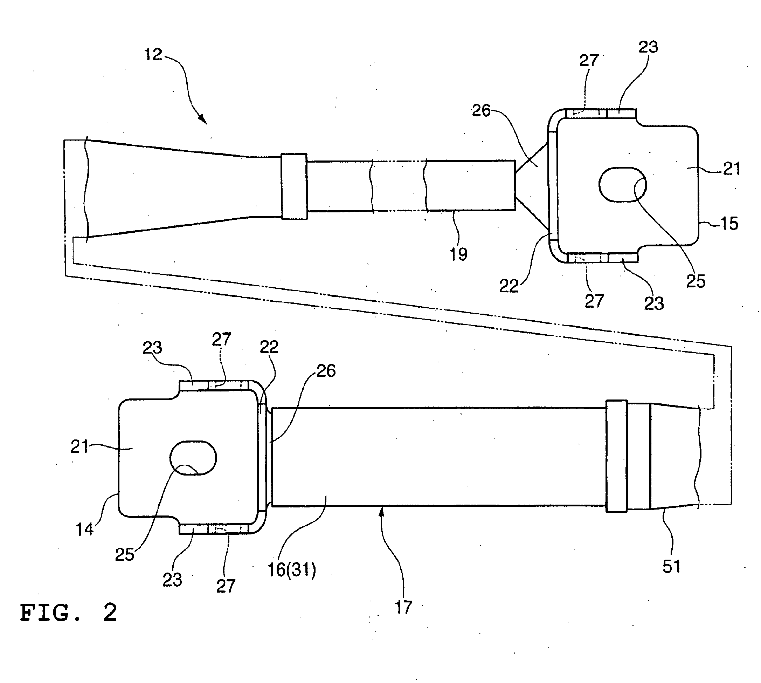

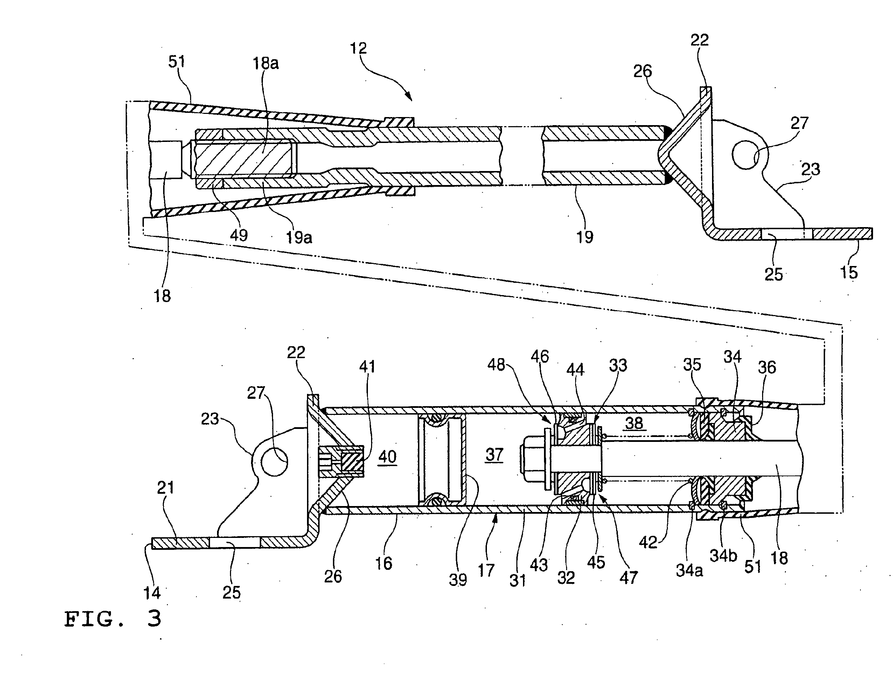

Fig. 1 is a perspective view of a body frame equipped with a body reinforcement device according to this embodiment. Fig. 2 is a plan view of the body reinforcement device for a vehicle according to this embodiment. Fig. 2 is a view of the reinforcement device, with a welding cone located upward of a mounting plate. Fig. 3 is a vertical sectional view of the body reinforcement device for a vehicle according to this embodiment.

In these figures, designated by reference numeral 1 is a monocoque body for a car as a body frame of this embodiment. The monocoque body 1 comprises, as shown in Fig. 1, side frames 2, 2 provided in a pair in the lateral direction of the body and extending longitudinally on both sides of the body; a floor panel 4 forming an under body 3, together with these side frames 2, 2; a bumper reinforcement 5 and a cross member 6 extending crosswise between the pair of side frames 2, 2 at the forward ends; a front fender apron 7; a front pillar 8; a center pillar 9; a roof 10; a rear pillar 11; a side shell 2a; and the like. The monocoque body 1 is formed of a plurality of pressed plates or pipes welded and assembled together.

In the monocoque body 1 of this embodiment, body reinforcement devices 12 according to this embodiment are mounted for attachment/detachment to the side frame 2 and the mounting portion for the bumper reinforcement 5.

The body reinforcement devices 12 are each formed in a slender shape, and are mounted for attachment/detachment to the side frame 2 and the bumper reinforcement 5 such that they are expandable in the lateral direction of the body, as shown in Fig. 1.

Mounting seats 13 of the side frame 2 on which the body reinforcement device 12 is mounted, have approximately the same height as the bottom surface of the floor panel 4 and are positioned at the bottom of the body exposed downward even after completion of the body. The mounting seat 13 is formed with a flat surface for the mounting of the body reinforcement device 12 and having a fixing nut embedded, though not shown in the figure. This mounting seat 13 represents the term "mounting portion to the body frame" referred to in the following.

The bumper reinforcement 5 of this embodiment is mounted, at both ends, to the mounting seats 13 (bumper reinforcement mounting portions) provided at the forward ends of the side frames 2, 2 with mounting bolts 24 to be described later. The mounting seat 13 represents the "bumper reinforcement mounting portion" referred to in the following. The bumper reinforcement 5 may be welded at the forward ends of the side frames 2, 2. The bumper reinforcement 5 can be formed by an extruded material made of aluminum alloy or a channel made of aluminum alloy or ferrous alloy.

At both ends of the bumper reinforcement 5 in the lateral direction is mounted for attachment/detachment the body reinforcement device 12 with mounting bolts 24 in a relation of being fastened together. The bumper reinforcement 5 is housed inside a bumper (not shown), together with the body reinforcement device 12.

The body reinforced device 12 includes, as shown in Fig. 2 and Fig. 3, mounting members 14, 15 at both ends attached to the body; a hydraulic damper 17 having a hydraulic cylinder 16 welded to one mounting member 14 of these mounting members; and an extension rod 19 for connecting a piston rod 18 of the hydraulic damper 17 and the other mounting member 15.

The mounting members 14, 15 are each formed in a given shape by a steel plate bent, and includes a mounting plate 21 attached to the body; a support plate 22 rising from one end of the mounting plate 21; and a pair of reinforcement ribs 23 for connecting the sides of these plates together.

The mounting plate 21 is formed with an elongated hole 25 for a mounting bolt 24 (see Fig. 1) with which the mounting member 14, 15 is attached to the body, as shown in Fig. 2. The elongated hole 25 is formed to be larger in the lateral direction on Fig. 2, that is, in the direction perpendicular to the main face of the support plate 22.

The mounting members 14, 15 are each attached to the body such that the main face of the support plate 22 is directed laterally of the body. Therefore, positions, at which these mounting members 14, 15 are attached, can be finely adjusted in the lateral direction of the body by as much as the moving allowance of the elongated hole 25 relative to the mounting bolt 24.

The support plate 22 is provided at its center with a welding cone 6. The cone 26 is formed by the support plate 22 pushed out at the center into a conical shape in the direction of separation from the mounting plate 21.

The reinforcement rib 23 is formed with a mounting hole 27 for a damping force measuring instrument.

The hydraulic damper 17 includes, as shown in Fig. 3, the hydraulic cylinder 16 having a cylinder tube 31 closed at one end by the one mounting member 14, and a choke 33 provided in a piston 32 of the hydraulic cylinder 16.

To one end of the cylinder tube 31 is welded the welding cone 26 of the mounting member 14 being inserted therein. This welding is performed by the conventionally well-known projection method, in which case the welding cone 26 is fitted in the opening of the cylinder tube 31 such that the connecting portion of both parts makes line contact.

As a result of the welding cone 26 inserted into the cylinder tube 31 to be fitted, even if the cylinder tube 31 is formed tapered at the edge, the welding cone 26 and the cylinder tube 31 are brought into line contact with each other while positioned approximately on the same axis. That is, compared with when seal-welding is performed, with the cylinder tube 31 abutted at its opening end against the closing plate, manufacturing of the cylinder tube 31 becomes easier, effecting cost reduction as well as improvement in external appearance.

The projection welding is performed by pressing the welding cone 26 and the cylinder tube 31 being combined as described above, against each other along the axial direction and energizing them with a high tension current.

The cylinder tube 31 is closed at the other end by a rod guide 34 for supporting the piston rod 18 for movement. The rod guide 34 is fitted in the cylinder tube 31 and fixed to the cylinder tube 31 by circlips 34a, 34b.

At both ends of the rod guide 34 in the axial direction are provided seal members 35, 36 for sealing its portions where the piston rod 18 penetrates the rod guide.

The piston 32 is formed in a circular shape in section so as to be fitted in the cylinder tube 31, defining a first oil chamber 37 and a second oil chamber 38 in the cylinder tube 31, and fixed to the piston rod 18 passing through the axial center with a fixing nut.

The first oil chamber 37 is formed between the piston 32 and a free piston 39 fitted for movement in the cylinder tube 31. The free piston 39 defines the first oil chamber 37. and a high pressure gas chamber 40 in one end portion of the cylinder tube 31. The high pressure gas chamber 40 is filled with N₂ gas at high pressure. Into the welding cone 26 of the mounting member 14 forming a wall of the high pressure gas chamber 40 is fitted a screw 41 with a sealing rubber for filling the high pressure gas chamber 40 with N₂ gas.

The piston 32 is biased in the direction of contraction of the hydraulic cylinder 16 by a compression coil spring 42 elastically fitted between the piston and the rod guide 34. The compression coil spring 42 is used for counteracting gas reaction force exerted on the piston 32 through the working oil in the cylinder tube 31. The gas reaction force is produced by the pressure receiving area of the piston 32 on the side of the second oil chamber 38 being smaller than that on the side of the first oil chamber 37.

That is, since the working oil in the first and second oil chambers 37, 38 is pressurized by the N₂ gas at high pressure, the piston 32 receives a gas reaction force corresponding to the foregoing difference in pressure receiving area and is biased by the gas reaction force in the direction of expansion of the hydraulic cylinder 16. In the hydraulic damper 17 of this embodiment, a length of the damper 17, obtained when the gas reaction force is counteracted by the spring force of the compression coil spring 42 to be balanced, is the free length, and the N₂ gas pressure is adjusted such that the free length is in agreement with the mounting size to the body.

As a result of the free length in agreement with the mounting size, as described above, the initial load becomes zero when the damper is mounted to the body, and even if a small load is exerted, the reinforcement device 12 contracts immediately in quick response, effecting generation of the damping force.

The choke 33 provided in the piston 32 is of the same structure as that used in the shock absorber for suspension devices or the like, and is formed of first and second check valves 47, 48 provided with disk springs 45, 46 for opening/closing openings at one ends of communication holes 43, 44 provided in the piston 32. The disk springs 45, 46 are each formed in an annular shape and formed of a plurality of spring pieces on top of one another, the inside circumferential surfaces of which are fixed to the piston 32. In the check valve 47, working oil flows in one direction from the first oil chamber 37 to the second oil chamber 38 against the spring force of the disc spring 45, and in the check valve 48, working oil flows in one direction from the second oil chamber 38 to the first oil chamber 37 against the spring force of the disc spring 46, whereby a damping force can be produced.

The extension rod 19 for connecting the forward end of the piston rod 18 and the other mounting member 15 is formed by a pipe, screwed at one end onto the forward end of the piston rod 18, and welded at the other end to the other mounting member 15.

The connecting portion of the extension rod 19 and the piston rod 18 is configured such that a male screw 18a formed on the piston rod 18 is fitted in a female screw 19a of the extension rod 19 and these screws are fastened by a lock nut 49. This mounting structure of the extension rod 19 by screws allows a changing free length of the reinforcement device 12 due to dispersion of the N₂ gas pressure to be finely adjusted.

The screwing section is covered by a rubber boot 51 provided to connect the extension rod 19 and the cylinder tube 31. The rubber boot 51 is used for preventing dust or muddy water from sticking to the piston rod 18, is formed in the shape of a conical pipe, and is fixed at one end to the outside circumferential surface of the cylinder tube 31 and at the other end to the outside circumferential surface of the extension rod 19.

Welding of the extension rod 19 to the other mounting member 15 is performed by the projection welding as in the welding of the mounting member 14 to the cylinder tube 31. That is, this welding is performed such that when the welding cone 26 of the other mounting member 15 is fitted at the forward end in the extension rod 19 and both parts are brought into line contact with each other, they are pressed against each other and energized with an electric current. Such a welding allows the extension rod 19 and the welding cone 26 to be easily positioned on the same axis.

For the body reinforcement device 12 described above to be mounted to the side frames 2, 2 of the monocoque body 1, the mounting plates 21 of the mounting members 14, 15, while being held at positions higher than the other parts, are put on the mounting seats 13 of the side frame 2 from below, followed by fastening the mounting bolts 24. The body reinforcement device 12 can be removed easily from the body when the mounting bolts 24 are unfastened and the mounting members 14, 15 are removed from the side frames 2, 2.

On the other hand, for the body reinforcement device 12 to be mounted on the bumper reinforcement 5 of the monocoque body 1, the mounting plates 21 of the mounting members 14, 15 are fastened, with the mounting bolts 24, to the mounting seats 13 of the monocoque body 1, together with the bumper reinforcement 5. The body reinforcement device 12 can also be removed easily from the mounting portions for the bumper reinforcement 5 when the mounting bolts 24 are removed.

As a result of the body reinforcement device 12 mounted to the side frame 2 and the bumper reinforcement 5 as described above, lateral rigidity of the monocoque body 1 can be improved. Therefore, the riding feeling is different in a vehicle in which the body reinforcement device 12 is mounted and in a vehicle in which the body reinforcement device 12 is removed.

If a finished body, in which suspension devices or other parts are mounted on the monocoque body 1, is lifted by a jack or the like, for example, the body reinforcement device 12 can be attached/detached with respect to the body from the underside. In the case where an under cover is provided, if the under cover is removed after the body is lifted by a jack or the like, the body reinforcement device 12 can easily be attached/detached from below. For the body reinforcement device 12 to be mounted for attachment/detachment to the side frame 2, as described above, the mounting can be realized if only mounting seats 13 are provided on the side frame 2 of the existing monocoque body 1.

On the other hand, when a bumper (not shown) of a finished body is removed, the body reinforcement device 12 mounted to the mounting portions (on the mounting seats 13) for the bumper reinforcement 5, is exposed to the outside of the body, together with the bumper reinforcement 5. Therefore, the body reinforcement device 12 can easily be attached/detached with respect to the bumper reinforcement 5, with the bumper removed.

Therefore, in the body reinforcement device 12 of this embodiment, without a significant change in the body structure of the existing vehicle, lateral rigidity of the monocoque body 1 is improved adequately while generation of vibration is suppressed, effecting improvement in riding feeling.

Although in this embodiment, an example has been shown in which the body reinforcement devices 12 are mounted to both of the side frame 2 and the bumper reinforcement 5, the riding feeling can be changed even if the body reinforcement device 12 is provided on either one of the side frame 2 and the bumper reinforcement 5.

Further, since the body reinforcement device 12 of this embodiment utilizes the space under the body or the space inside the bumper, no serviceability or room space properties are impaired.

Although in this embodiment, an example has been shown in which the body reinforcement device 12 is mounted to the bumper reinforcement mounting portions (on the mounting seats 13), being fastened together with the bumper reinforcement 5, the body reinforcement device 12 can be mounted on the mounting seats 13 of the monocoque body in a region near the bumper reinforcement 5 on its mounting seats. If the bumper reinforcement 5 is welded to the mounting seats 13, the body reinforcement device 12 is mounted for attachment/detachment directly to the bumper reinforcement 5 on the front face or the bottom surface.

### (Second Embodiment)

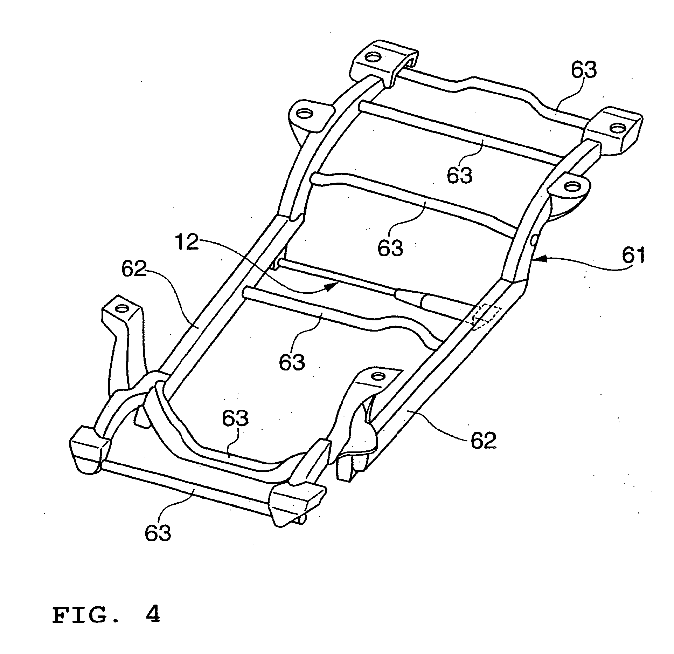

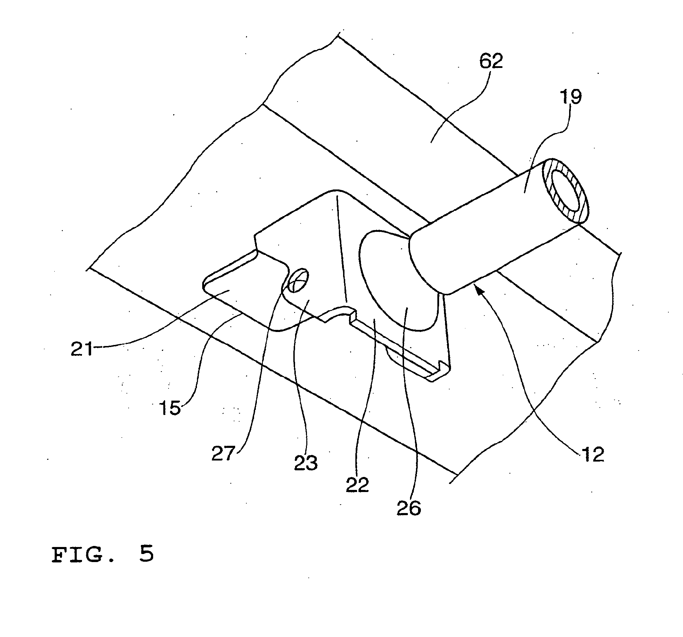

The body frame to which the body reinforcement device 12 according to this embodiment is mounted, may be formed as shown in Fig. 4 and Fig. 5.

Fig. 4 is a perspective view showing another embodiment of the body reinforcement device for a vehicle, and Fig. 5 is a perspective view showing on an enlarged scale the mounting portion for the body reinforcement device. In these figures, like parts as described in Fig. 1-Fig. 3 are designated by like reference numerals, and detailed description is not repeated as appropriate.

A body frame 61 shown in Fig. 4 is of a conventionally well-known ladder type, and includes a pair of side frames 62, 62 extending longitudinally on both left and right sides of the body, a plurality of cross members 63 extending crosswise between the side frames 62, 62, and the like.

The body reinforcement device 12 of this embodiment has the same structure as that of the first embodiment, and as shown in Fig. 5, the device 12, extending in the lateral direction of the body, is mounted for attachment/detachment on the bottom surfaces (mounting seats) of the side frames 62, 62.

Although this embodiment is constructed such that the body reinforcement device 12 is mounted to the ladder type body frame 61, this body reinforcement device 12 improves lateral rigidity of the body frame 61 adequately as well as the riding feeling, while generation of vibration is suppressed, thereby producing the same effect as in the first embodiment.

### (Third Embodiment)

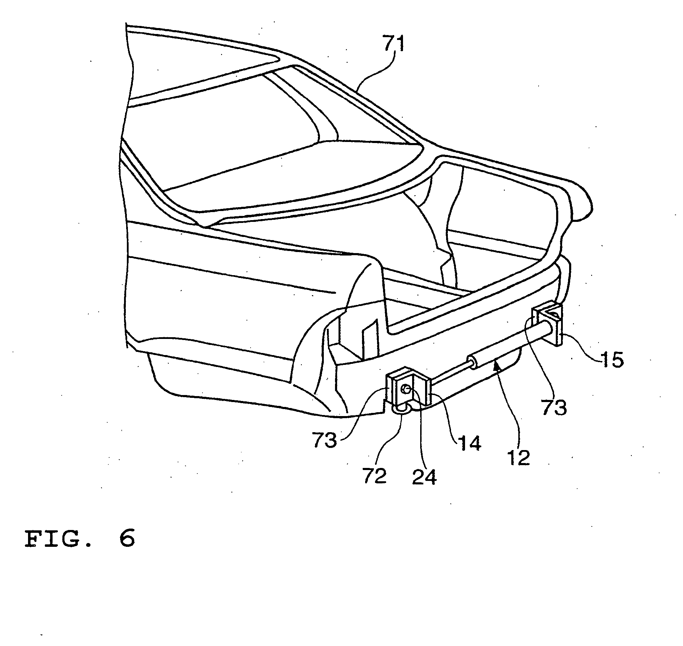

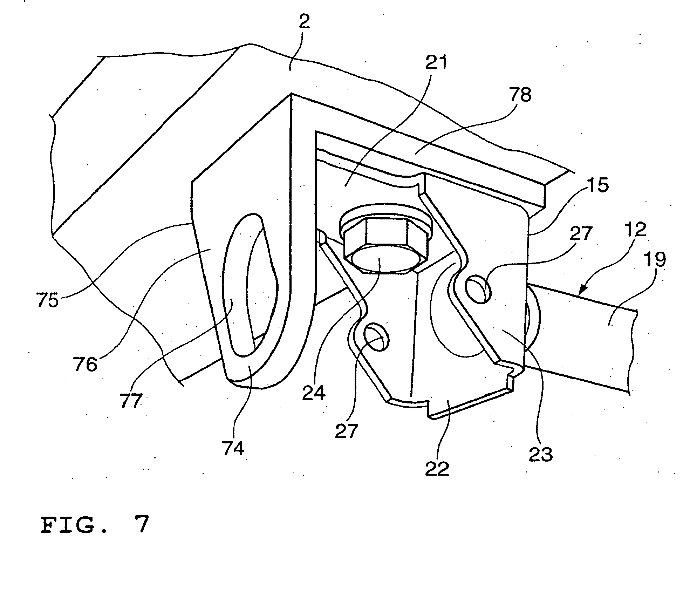

The body reinforcement device for a vehicle according to this embodiment can also be mounted to the body frame, together with traction hooks, as shown in Fig. 6 and Fig. 7.

Fig. 6 is a perspective view showing an embodiment of the body reinforcement device for a vehicle, which is mounted on the rear faces of traction hook supports. Fig. 7 is a perspective view showing the embodiment of the body reinforcement device for a vehicle, which is mounted on the bottom surfaces of traction hook supports. In these figures, like parts as described in Fig. 1-Fig. 5 are designated by like reference numerals, and detailed description is not repeated as appropriate.

A car body 71 in general, is provided at the rear end with traction hooks 72, as shown in Fig. 6. The traction hooks 72 are each formed, for example, by an eyebolt, and are mounted to a pair of left and right side frames (not shown) at the rear ends through traction hook supports 73, respectively. The traction hook 72 is mounted, protruding downward, to the traction hook support 73. The body reinforcement device 12 shown in Fig. 6 is mounted to the supports 73 for attachment/detachment, extending crosswise between the pair of left and right supports 73.

A traction hook 74 shown in Fig. 7 is formed by a steel plate 75, in the L-shape in section, provided with an elongated hole 77 in the vertical extension 76. The traction hook 74 is mounted for attachment/detachment to the rear end of the side frame on the bottom surface, with a horizontal extension 78 formed integrally at the upper end of the vertical extension 76 and fastened together with the mounting member 14, 15 of the body reinforcement device 12.

The body reinforcement device 12 for a vehicle according to the embodiment shown in Fig. 6 and Fig. 7, improves lateral rigidity of the monocoque body 1 adequately wile generation of vibration is suppressed between the pairs of traction hooks 72, 72, 74, 74, effecting improvement in riding feeling. In addition, the body reinforcement device 12 of this embodiment is mounted to the traction hook mounting portions where the rigidity of body is generally high, providing reliable mounting.

Further, since the mounting members 14, 15 of the body reinforcement device 12 are mounted to the body frame, being fastened together with the traction hooks 72, 74, mounting seats only for the mounting of the body reinforcement device 1 to the body frame are unnecessary. Therefore, the structure as shown in this embodiment allows the body reinforcement device 12 to be mounted to the body frame even more easily. Although in this embodiment, an example has been shown in which the body reinforcement device 12 is mounted to the body frame, being fastened together with the traction hooks 72, 74 at the rear end of the body, the body reinforcement device 12 may be mounted to the body frame near a region where the traction hook supports 73 or plates 75 are mounted.

Further, the body reinforcement device 12 may be mounted to the mounting portions for traction hooks (not shown) provided at the forward end of the body.

### (Fourth Embodiment)

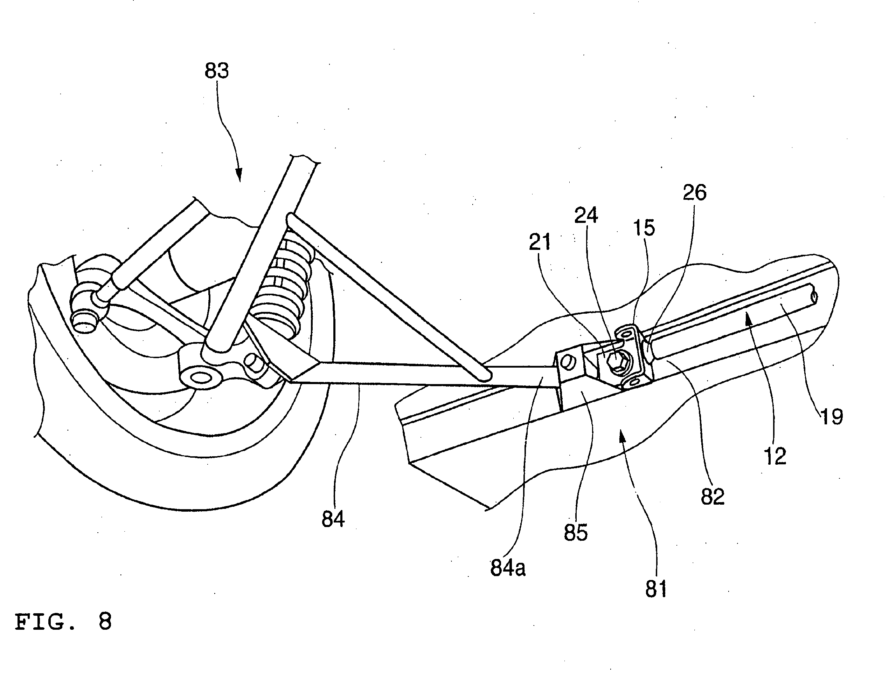

The body reinforcement device 12 for a vehicle according to this embodiment can be mounted for attachment/detachment to the lower arm mounting portion of a suspension device in the body frame of a vehicle, as shown in Fig. 8.

Fig. 8 is a perspective view showing an embodiment of the body reinforcement device for a vehicle, which is mounted to the lower arm mounting portion. In these figures, like parts as described in Fig. 1-Fig. 5 are designated by like reference numerals, and detailed description is not repeated as appropriate.

A body frame 81 of a vehicle shown in Fig. 8 is formed with a vertical wall 82 directed longitudinally of the body and extending from one end to the other end thereof in the lateral direction. To the vertical wall 82 is fixed a bracket 85 for supporting one of two base ends, 84a, of the lower arm 84 in the longitudinal direction, the lower arm 84 assuming the "A" shape in plan in a wheel suspension device 83. The bracket 85 is provided to be in a pair with respect to a bracket for supporting the other lower arm (not shown) in the lateral direction of the body. That is, the vertical wall 82 constitutes a mounting seat (left and right-lower arm mounting portion) for the bracket 85 of the lower arm 84 to be mounted thereon.

The body reinforcement device 12 for a vehicle according to this embodiment is disposed between the pair of brackets 85, 85, and mounted for attachment/detachment to the vertical wall 82. Therefore, according to this embodiment, since lateral rigidity of portions of the body frame 81 on which lateral pushing forces are exerted from the left and right lower arms, is improved adequately while generation of vibration is suppressed, the riding feeling can be improved efficiently.

Further, since the body reinforcement device 12 utilizes the existing lower arm mounting seat (vertical wall 82), the device can be mounted easily compared with when a special mounting seat is provided on the body frame.

Further, in the case a load may be applied during running such that the body frame 81 is pushed laterally, the body reinforcement device 12, positioned as described above, allows the body frame 81 to be reinforced efficiently against the pushing force by the lower arm 84 of the suspension device 83.

Although in this embodiment, an example has be shown in which the body reinforcement device 12 is mounted to a region of the vertical wall 82 adjacent to the brackets 85, the body reinforcement device 12 may be mounted to the vertical wall 82, being fastened together with the brackets 85.

The description above discloses (amongst others) an embodiment of a body reinforcement device formed in a slender shape and provided in the middle with hydraulic damping force generation means for generating a damping force against its deformation in the longitudinal direction, in which the longitudinal direction is defined as a lateral direction of the body, and the body reinforcement device is mounted at both ends, for attachment/detachment from the underside, to the bottom of a body frame exposed downward under the floor surface of the body frame.

The body reinforcement device according to this embodiment, when mounted to the body frame, improves lateral rigidity of the body frame adequately and improves the riding feeling, while suppressing generation of vibration. The body reinforcement device can easily be attached to and detached from the body if the body is lifted, for example, by a jack or the like.

The term "exposed downward" used doesn't necessarily means that the body frame is exposed at all times, but includes a case, for example, that an under cover is provided for attachment/detachment to protect the bottom surface of the body frame, and the body frame is exposed if the under cover is removed.

For the body reinforcement device to be mounted to the body frame for attachment/detachment, as described above, mounting can be realized if only mounting seats or mounting brackets are provided on the existing body.

Therefore, according to the embodiment, the body reinforcement device for a vehicle can be provided, which is capable of effecting easy improvement in riding feeling without significant change in the body structure of the existing vehicle. Further, since the body reinforcement device according to the embodiment utilizes the space under the body, no serviceability or room space properties are impaired.

Preferably, the body reinforcement device is mounted to the left and right side frames of a body frame extending in the longitudinal direction on both sides of the body.

Accordingly, since lateral rigidity of the side frame which is essential for a body frame, can be improved adequately while generation of vibration is suppressed, the riding feeling can be improved efficiently.

Further, preferably the body reinforcement device is mounted to the left and right-traction hook mounting portions of the body frame at the ends of the body in the longitudinal direction. The left and right-traction hook mounting portions herein referred to, include, in addition to the regions where supporting bodies with traction hooks are mounted to the body frame, regions adjacent to the supporting bodies mounted to the body frame. When the body reinforcement device is mounted to the regions where the supporting bodies are mounted to the body frame, mounting can be achieved by fastening the supporting bodies and the body reinforcement device together.

Accordingly, the body reinforcement device for a vehicle according to this embodiment is mounted at the traction hook mounting portions having high rigidity in general, thereby effecting reliable mounting of the reinforcement device. If the reinforcement device is mounted to the body frame, being fastened together with the traction hooks, it can be mounted to the body frame more easily and economically.

According to a further embodiment, the body reinforcement device is mounted to the left and right-lower arm mounting portion of a suspension device in the body frame. The left and right-lower arm mounting portion herein referred to, includes, in addition to the region where the support brackets for supporting the lower arms are mounted to the body frame, regions adjacent to the brackets mounted to the body frame. When the body reinforcement device is mounted to the region where the brackets are mounted to the body frame, mounting can be achieved by fastening the brackets and the body reinforcement device together.

Accordingly, since lateral rigidity of the body frame at portions on which lateral pushing forces are exerted from the left and right lower arms, can be improved adequately while generation of vibration is suppressed, the riding feeling can be improved efficiently.

Further, if lower arm mounting brackets are utilized in the mounting to the body frame, the device can be mounted easily and economically compared with when special seats are provided on the body frame.

According to a further embodiment, there is disclosed a body reinforcement device for a vehicle formed in a slender shape and provided in the middle with hydraulic damping force generation means for generating a damping force against its deformation in the longitudinal direction, in which the longitudinal direction is defined as a lateral direction of the body, and the body reinforcement device is mounted at both ends, for attachment/detachment, to the bumper reinforcement mounting portions of a body frame. The bumper reinforcement mounting portions herein referred to, include, in addition to the regions where the bumper reinforcement is mounted to the body frame, a region adjacent to the bumper reinforcement mounted to the body frame. When the bumper reinforcement is mounted to the regions where the bumper reinforcement is mounted to the body frame, mounting can be achieved by fastening the bumper reinforcement and the body reinforcement device together.

Accordingly, with the device mounted to the bumper reinforcement mounting portions, lateral rigidity of the body frame can be improved adequately while generation of vibration is suppressed, improving the riding feeling. In addition, with the bumper removed from the body, the device is exposed to the outside of the body, together with the bumper reinforcement, providing easy attachment/detachment with respect to the bumper reinforcement mounting portions in this condition. Further, since the device utilizes the space inside the bumper, no serviceability or room space properties are impaired.

Further, for the body reinforcement device to be mounted to the bumper reinforcement mounting portions for attachment/detachment, as described above, mounting can be realized if only the device is fixed to the body frame together with the bumper reinforcement, or it is fixed to the bumper reinforcement itself fixed to the body frame, or further it is fixed to the body frame near the portions at which the bumper reinforcement is fixed to the frame, for example.

Therefore, according to the present embodiment, the body reinforcement device for a vehicle can be provided, which is capable of effecting easy and economical improvement in riding feeling without significant change in the body structure of the existing vehicle.

The description above discloses, as a particularly preferred embodiment, in order to provide a body reinforcement device for a vehicle capable of effecting easy improvement in riding feeling through attachment/detachment of the reinforcement member depending on the preference of the driver, without a significant change in the existing vehicle body structure and without lowering serviceability and room space properties, a body reinforcement device for a vehicle is formed in a slender shape and provided in the middle with a hydraulic damper 17 for generating a damping force against its deformation in the, longitudinal direction. The longitudinal direction is defined as a lateral direction of the body, and the reinforcement device is mounted at both ends, for attachment/detachment from the underside, to the bottom of a monocoque body 1 exposed downward under a floor panel 4 of the monocoque body.

## Claims

1. Body reinforcement device (12) for a vehicle, said body reinforcement device extending in a lateral direction of a body frame (1, 61) and comprising a hydraulic damping force generation means generating a damping force against its longitudinal deformation, **characterized by**
mounting members (14, 15), each comprising a mounting plate (21) attached to the body frame and a support plate (22), wherein the support plate (22) is fixed at the end portions of the body reinforcement device (12) to the damping force generation means by a welding cone (26) provided at the center of the support plate (22).

2. Body reinforcement device according to claim 1, **characterized in that** end portions of the body reinforcement device are configured to be removably attached, from the underside, to a bottom of the body frame exposed downward under a floor surface of the body frame.

3. Body reinforcement device according to claim 1, **characterized in that** end portions of the body reinforcement device are configured to be removably attached to bumper reinforcement mounting portions (13) of the body frame.

4. Body reinforcement device according to claim 1, **characterized in that** end portions of the body reinforcement device are configured to be removably attached to left and right traction hook mounting portions (73) of the body frame at the end thereof in the longitudinal direction.

5. Body reinforcement device according to claim 1, **characterized in that** end portions of the body reinforcement device are configured to be removably attached to left and right lower arm mounting portion (84) of a suspension device (83) of the vehicle.

6. Body reinforcement device according to claim 1 or 2, **characterized in that** mounting portions for the body reinforcement device (12) to the body frame (1, 61) are left and right side frames (2, 62) extending longitudinally on both sides of the body.

7. Body reinforcement device for a vehicle according to one of the claims 1 to 6, **characterized in that** said body reinforcement device is formed in a slender shape.

8. Body reinforcement device for a vehicle according to one of the claims 1 to 7, **characterized in that** the hydraulic damping force generation means is provided in a middle portion of the body reinforcement device.

9. Body reinforcement device for a vehicle according to one of the claims 1 to 8, **characterized by** a hydraulic damper (17) having a hydraulic cylinder (16) welded to one of the mounting members (14), and an extension rod (19) for connecting a piston rod (18) of the hydraulic damper (17) with the other one of the mounting members (15).

10. Body reinforcement device for a vehicle according to claim 9, **characterized in that** the hydraulic cylinder (16) of the hydraulic damper (17) comprises a cylinder tube (31) closed at one end by the welding cone (26) provided at the center of the support plate (22) of one of the mounting member (14).

11. Body reinforcement device for a vehicle according to claim 9 or 10, **characterized by** a piston (32) fitted in a cylinder tube (31), defining a first oil chamber (37) and a second oil chamber (38) in the cylinder tube (31), and being fixed to the piston rod (18), wherein the first oil chamber (37) is formed between the piston (32) and a free piston (39) fitted for movement in the cylinder tube (31), and wherein the free piston (39) defines the first oil chamber (37) and a high pressure gas chamber (40) in one end portion of the cylinder tube (31).

## Patentansprüche

1. Karosserieverstärkungsvorrichtung (12) für ein Fahrzeug, wobei sich die Karosserieverstärkungsvorrichtung in eine seitliche Richtung eines Karosserierahmens (1, 61) erstreckt und eine hydraulische Dämpfungskraft- Erzeugungseinrichtung aufweist, die eine Dämpfungskraft gegen ihre Längsverformung erzeugt, **gekennzeichnet durch**
Montageteile (14, 15), die jeweils eine Montageplatte (21) aufweisen, verbunden mit dem Karosserierahmen und einer Tragplatte (22), wobei die Tragplatte (22) an den Endabschnitten der Karosserieverstärkungsvorrichtung (12) mit der Dämpfungskraft- Erzeugungseinrichtung **durch** einen Schweißkegel (26), vorgesehen an der Mitte der Tragplatte (22), befestigt ist.

2. Karosserieverstärkungsvorrichtung nach Anspruch 1, **dadurch gekennzeichnet, dass** Endabschnitte der Karosserieverstärkungsvorrichtung konfiguriert sind, um entfembar verbunden zu sein, von der Unterseite zu einem Boden des Karosserierahmens, der nach unten unter einer Bodenoberfläche des Karosserierahmens freigelegt ist.

3. Karosserieverstärkungsvorrichtung nach Anspruch 1, **dadurch gekennzeichnet, dass** Endabschnitte der Karosserieverstärkungsvorrichtung konfiguriert sind, um mit Dämpferverstärkungs- Montageabschnitten (13) des Karosserierahmens entfembar verbunden zu sein.

4. Karosserieverstärkungsvorrichtung nach Anspruch 1, **dadurch gekennzeichnet, dass** Endabschnitte der Karosserieverstärkungsvorrichtung konfiguriert sind, um mit linken und rechten Traktionshaken- Montageabschnitten (73) des Karosserierahmens an den Enden derselben in der Längsrichtung entfembar verbunden zu sein.

5. Karosserieverstärkungsvorrichtung nach Anspruch 1, **dadurch gekennzeichnet, dass** Endabschnitte der Karosserieverstärkungsvonichtung konfiguriert sind, um mit linken und rechten unteren Arm- Montageabschnitten (84) einer Aufhängungsvorrichtung (83) des Fahrzeuges entfembar verbunden zu sein.

6. Karosserieverstärkungsvorrichtung nach Anspruch 1 oder 2, **dadurch gekennzeichnet, dass** Montageabschnitte für die Karosserieverstärkungsvorrichtung (12) an dem Karosserierahmen (1, 61) linke und rechte Seitenrahmen (2, 62) sind, die sich längs an beiden Seiten der Karosserie erstrecken.

7. Karosserieverstärkungsvorrichtung für ein Fahrzeug nach einem der Ansprüche 1 bis 6, **dadurch gekennzeichnet, dass** die Karosserieverstärkungsvorrichtung in einer schlanken Form gebildet ist.

8. Karosserieverstärkungsvorrichtung für ein Fahrzeug nach einem der Ansprüche 1 bis 7, **dadurch gekennzeichnet, dass** die hydraulische Dämpfungskraft- Erzeugungseinrichtung in einem mittleren Abschnitt der Karosserieverstärkungsvorrichtung vorgesehen ist.

9. Karosserieverstärkungsvorrichtung für ein Fahrzeug nach einem der Ansprüche 1 bis 8, **gekennzeichnet durch** einen hydraulischen Dämpfer (17) mit einem Hydraulikzylinder, verschweißt mit einem der Montageteile (14), und einer Verlängerungsstange (19) zum Verbinden einer Kolbenstange (18) des hydraulischen Dämpfers (17) mit dem anderen der Montageteile (15).

10. Karosserieverstärkungsvorrichtung für ein Fahrzeug nach Anspruch 9, **dadurch gekennzeichnet, dass** der Hydraulikzylinder (16) des hydraulischen Dämpfers (17) ein Zylinderrohr (31) aufweist, geschlossen an einem Ende durch den Schweißkegel (26), vorgesehen in der Mitte der Tragplatte (22) eines der Montageteile (14).

11. Karosserieverstärkungsvorrichtung für ein Fahrzeug nach Anspruch 9 oder 10, **gekennzeichnet durch** einen Kolben (32), eingesetzt in das Zylinderrohr (31), der eine erste Ölkammer (37) und eine zweite Ölkammer (38) in dem Zylinderrohr (31) bildet, und der an der Kolbenstange (18) befestigt ist, wobei die erste Ölkammer (37) gebildet ist zwischen dem Kolben (32) und einem freien Kolben (39), eingesetzt zur Bewegung in dem Zylinderrohr (31), und wobei der freie Kolben(39) die erste Ölkammer (37) und eine Hochdruck- Gaskammer (40) in einem Endabschnitt des Zylinderrohres (31) bildet.

## Revendications

1. Dispositif de renforcement de carrosserie (12) pour véhicule, ledit dispositif de renforcement de carrosserie s'étendant dans une direction latérale d'un cadre de carrosserie (1, 61) et comprenant des moyens hydrauliques de génération de force d'amortissement générant une force d'amortissement contre sa déformation longitudinale,
**caractérisé par**
des éléments de montage (14, 15), chacun comprenant une plaque de montage (21) attachée au cadre de carrosserie et une plaque de support (22), dans lequel la plaque de support (22) est fixée, au niveau des parties d'extrémité du dispositif de renforcement de carrosserie (12), aux moyens de génération de force d'amortissement par un cône de soudage (26) prévu au centre de la plaque de support (22).

2. Dispositif de renforcement de carrosserie selon la revendication 1, **caractérisé en ce que** des parties d'extrémité du dispositif de renforcement de carrosserie sont configurées pour être attachées de façon amovible, depuis le dessous, à un fond du cadre de carrosserie exposé vers le bas sous une surface de plancher du cadre de carrosserie.

3. Dispositif de renforcement de carrosserie selon la revendication 1, **caractérisé en ce que** des parties d'extrémité du dispositif de renforcement de carrosserie sont configurées pour être attachées de façon amovible à des parties de montage de renforcement de pare-chocs (13) du cadre de carrosserie.

4. Dispositif de renforcement de carrosserie selon la revendication 1, **caractérisé en ce que** des parties d'extrémité du dispositif de renforcement de carrosserie sont configurées pour être attachées de façon amovible à des parties de montage de crochet d'attelage gauche et droite (73) du cadre de carrosserie à l'extrémité de celui-ci dans la direction longitudinale.

5. Dispositif de renforcement de carrosserie selon la revendication 1, **caractérisé en ce que** des parties d'extrémité du dispositif de renforcement de carrosserie sont configurées pour être attachées de façon amovible à une partie de montage de bras inférieur gauche et droit (84) d'un dispositif de suspension (83) du véhicule.

6. Dispositif de renforcement de carrosserie selon la revendication 1 ou 2, **caractérisé en ce que** des parties de montage pour le dispositif de renforcement de carrosserie (12) au cadre de carrosserie (1, 61) sont des cadres latéraux gauche et droit (2, 62) s'étendant de façon longitudinale des deux côtés de la carrosserie.

7. Dispositif de renforcement de carrosserie pour véhicule selon l'une quelconque des revendications 1 à 6, **caractérisé en ce que** ledit dispositif de renforcement de carrosserie est formé dans une forme mince.

8. Dispositif de renforcement de carrosserie pour véhicule selon l'une quelconque des revendications 1 à 7, **caractérisé en ce que** les moyens hydrauliques de génération de force d'amortissement sont prévus dans une partie centrale du dispositif de renforcement de carrosserie.

9. Dispositif de renforcement de carrosserie pour véhicule selon l'une quelconque des revendications 1 à 8, **caractérisé par** un amortisseur hydraulique (17) comportant un cylindre hydraulique (16) soudé à l'un des éléments de montage (14) et une tige d'extension (19) pour raccorder une tige de piston (18) de l'amortisseur hydraulique (17) avec l'autre des éléments de montage (15).

10. Dispositif de renforcement de carrosserie pour véhicule selon la revendication 9, **caractérisé en ce que** le cylindre hydraulique (16) de l'amortisseur hydraulique (17) comprend un tube de cylindre (31) fermé à une extrémité par le cône de soudage (26) prévu au centre de la plaque de support (22) de l'un des éléments de montage (14).

11. Dispositif de renforcement de carrosserie pour véhicule selon la revendication 9 ou 10, **caractérisé par** un piston (32) ajusté dans un tube de cylindre (31), définissant une première chambre d'huile (37) et une deuxième chambre d'huile (38) dans le tube de cylindre (31), et étant fixé à la tige de piston (18), dans lequel la première chambre d'huile (37) est formée entre le piston (32) et un piston libre (39) ajusté pour un mouvement dans le tube de cylindre (31), et dans lequel le piston libre (39) définit la première chambre d'huile (37) et une chambre de gaz haute pression (40) dans une partie d'extrémité du tube de cylindre (31).
